# EUROPEAN PATENT SPECIFICATION

(11) **EP 3 382 096 B1**
(45) Date of publication and mention of the grant of the patent: **19.08.2020**
(21) Application number: 18380002.8
(22) Date of filing: 20.03.2018
(51) Int. Cl.: D21H 27/10, B65D 81/34, D21H 17/67, D21H 19/38, D21H 19/40, D21H 21/52, B65D 81/24

(54) **PROCEDURE FOR OBTAINING AN ETHYLENE ABSORBENT PAPER AND THE PRODUCT OBTAINED BY SAID MEANS**
VERFAHREN ZUR ERHALTUNG VON ETHYLENE SAUGFÄHIGEM PRODUKT UND DAS PRODUKT ERHALTEN DURCH DIESES VERFAHREN
PROCEDE POUR L'OBTENTION D'UN PRODUIT ABSORBANT L'ETHYLENE ET PRODUIT AINSI OBTENU

(30) Priority: 30.03.2017 ES 201700328
(43) Date of publication of application: 03.10.2018
(73) Proprietor: Smurfit Kappa España, S.A., 09001 Burgos (ES)
(72) Inventor: FERNANDO DE LA CUADRA, Antonio, - (ES)
(74) Representative: Gonzalez Palmero, Fé

(56) References cited:
- WO-A1-2014/182164
- CA-A1- 2 763 620
- NICOLAS KELLER ET AL: "Ethylene Removal and Fresh Product Storage: A Challenge at the Frontiers of Chemistry. Toward an Approach by Photocatalytic Oxidation", CHEMICAL REVIEWS, vol. 113, no. 7, 10 July 2013 (2013-07-10) , pages 5029-5070, XP055450258, US ISSN: 0009-2665, DOI: 10.1021/cr900398v
- KIRTIRAJ K. GAIKWAD ET AL: "Functional Corrugated Board with Organic and Inorganic Materials in Food Packaging Applications : A Review", KOREAN JOURNAL OF PACKAGING SCIENCE AND TECHNOLOGY, vol. 22, no. 3, 31 December 2016 (2016-12-31), pages 49-58, XP055489619, ISSN: 1226-0207, DOI: 10.20909/kopast.2016.22.3.49
- Bhagwanjee Jha ET AL: "Basics of Zeolites" In: "Carbon and Oxide Nanostructures", 1 January 2016 (2016-01-01), Springer Berlin Heidelberg, Berlin, Heidelberg, XP055489623, ISSN: 1869-8433 ISBN: 978-3-642-14673-2 vol. 78, pages 5-31, DOI: 10.1007/978-981-10-1404-8_2, * tables 2.3, 2.5, 2.11 *

## Description

### OBJECT OF THE INVENTION

The present invention refers to a procedure for obtaining an ethylene absorbent paper, designed to come into contact with foodstuffs, with the goal of absorbing the ethylene thereof and in this way delay the process of ripening of fruits and vegetables, thus extending the shelf life thereof.

Therefore, the invention affects the product obtained by means of the process, that is, an ideal paper/cardboard for manufacturing cardboard containers for storing and transporting fruits and vegetables, free of any volatile organic compounds.

The paper obtained can also be applied for conserving plants, flowers and similar products.

### BACKGROUND OF THE INVENTION

Varnish coatings used in, for example, cardboard and similar type boxes designed for storing and transporting, for example, fruits and vegetables, require the additive used in the varnish formulation to be included in a positive list of the Regulation (EU) n. 10/2011 of the Commission, of 14 January 2011, for plastic objects and materials designed to be in contact with foodstuffs, otherwise said additives cannot be used.

As is commonly known, ethylene is a vegetable hormone produced during the ripening of fruit and vegetable, and it is responsible for modifying the rate of breathing, the softening of tissues and other physiological disorders, speeding up the ageing process of fruit and vegetable.

Although there are some known products and industrial property trademarks related to ethylene absorbent products, all of them share something in common, which is the fact that the absorbent product in each individual case must never come into direct contact with the product the shelf life of which is being extended, since they could contaminate it, therefore these products/trademarks are not suitable for obtaining paper designed for manufacturing boxes, containers and similar products for storing and conserving fruits, vegetables, plants or flowers.

More specifically, there are bags in the market that contain potassium permanganate, which are placed in the interior of the containers holding the fruit and vegetable being transported. The issue with this product is that it cannot come into contact with the foodstuffs due to the high toxicity thereof.

There are other embodiments that use different layers of material including ethylene absorbents and absorbents that cannot come into contact with foodstuffs due to the toxicity thereof.

In this regard, patent US 2010092634 can be cited, in which a lacquer comprising an ethylene absorbent product is applied to a cardboard layer, so that although said product is not dangerous for foodstuffs, said product is applied diluted in a lacquer, which can itself be dangerous since it contains volatile organic compounds.

### DESCRIPTION OF THE INVENTION

The invention is based on producing a paper with ethylene absorbent properties so that said paper can come into contact with the foodstuffs it is preserving, without any risk of contamination for said foodstuffs. The object of the invention is performed according with the method of claim 1. The dependent claim 2 discloses a preferred embodiment of the method of claim 1.

More concretely, the method for manufacturing a corrugated cardboard container wherein the corrugated cardboard is made of three or five layers of paper and wherein at least an upper layer of paper is in contact with the fruits, vegetables, plants or flowers during the transport or storage. The method of the invention comprises the steps of: (a) obtaining a water-based varnish free of volatile compounds further comprising: (a.1) dissolve in water a solid content based on ethylene absorbent materials comprising clays and/or active carbon and/or zeolites with a pore size ranging between 3,5 and 5 angstroms and a granulometry ranging between 1 and 15 microns with a load percentage of the solid content ranging 1 % and 47% w/w; (b) apply the water-based varnish (2) obtained in step (a) on a sheet of paper (1) that conforms, at least, the upper layer of paper of the corrugated carboard container that is contact with the fruits, vegetables, plants or flowers during the transport or storage; and wherein the application of the water-based varnish is made by means of flexography techniques with a dry weight in grams ranging between 0,5 g/m² and 15 g/m².

In a preferred embodiment, the load percentage of the solid content comprising clays and/or active carbon and/or zeolites is 47% w/w.

Corrugated cardboard is a product used mainly for manufacturing containers or boxes for transporting goods. A corrugated cardboard container according with this invention is disclosed in the claim 3. A preferred embodiment of the corrugated cardboard container of the claim 3 is disclosed in the dependent claim 4.

More concretely, the corrugated cardboard container according with the invention is made of layers of paper and wherein at least one layer of paper is in contact with the fruits, vegetables, plants or flowers during the transport or storage; wherein the at least one layer of paper that is in contact with the fruits, vegetables, plants or flowers during the transport or storage consists on a sheet of paper coated with a water-based varnish made of a mixture of solid content based on ethylene absorbent materials comprising clays and/or active carbon and/or zeolites with a pore size ranging between 3,5 and 5 angstroms and a granulometry ranging between 1 and 15 microns with a load percentage of the solid content ranging 1% and 47% w/w and a dry weight in grams ranging between 0,5 g/m² and 15 g/m².

In a preferred embodiment, the load percentage of the solid content comprising clays and/or active carbon and/or zeolites is 47% w/w.

Corrugated cardboard is manufactured by a specific machine known as a corrugator. The cardboard is formed by different papers that comprise the cardboard after going through the suitable treatment in the corrugating machine. It can comprise three or five layers. Each layer corresponds to a sheet of paper.

The cardboard comprising three layers is formed by placing three paper coils in the corrugating machine, such that the intermediate coil is treated in order to fold the paper forming the corrugation to then adhere the respective layers of flat paper to the upper and lower planes of the corrugated paper.

The invention proposes that the upper layer or the corrugated cardboard that is going to come into contact with the product corresponds to the one detailed in the invention.

Since the type of varnished used is water-based and free of volatile organic compounds, said varnish is innocuous when it comes into contact with fruit or vegetable produce.

In this way, a uniform layer of an ethylene absorbent product is applied on the paper, using said paper for the coating layer in the manufacturing of an active container, that is, for storing and transporting fruit and vegetable, with the aim of extending the shelf life of said fruit and vegetable, and finally to delay the ripening thereof.

The product obtained can be regarded as a container solution that eliminates ethylene from the environment of fresh fruit and vegetable, slowing down the ripening process and therefore the deterioration of vegetable produce, extending the shelf life thereof while they are in containers.

It is important to take into account that the paper proposed by the invention is the paper that is in contact with the foodstuffs, but it could also be the paper on the outer layer of the container, so that when boxes are stacked up it would act as an ethylene absorbent over the box below it in the stack, therefore, the packaged product would be preserved both directly by the inner paper of the container as well as indirectly by the outer paper.

### DESCRIPTION OF THE DRAWINGS

To complete the invention described below and in order to give a better understanding of the characteristics of the invention, according to a preferred embodiment thereof, this description is accompanied by a set of drawings in which the figures described below have been represented, for purely illustrative purposes and should not be construed as limiting:

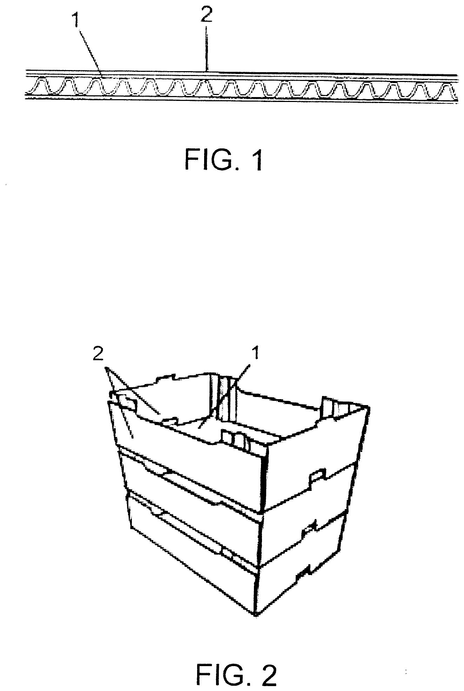

Figure 1. - It shows a representation corresponding to a sectional view of a cardboard sheet, the upper layer of which is formed by the paper proposed by the invention, with said paper being made according to the object of the present invention.
Figure 2. - It shows a perspective view of several stacked cardboard containers, with said containers comprising the paper that is the object of the present invention.

### EXAMPLE EMBODIMENT

In the experiment, a water based varnish (2) was used, adding 47% solid contents including zeolites and/or clays and/or active carbon, all of which had a pore size below 5 A, and a granulometry below 7 microns, and the mixture was shaken until it became completely homogenised, in order to then apply it by means of flexography techniques on a sheet of paper (1), with a dry weight in grams of 8 g/m².

This paper sheet (1) was then used to obtain a container for storing fruit and vegetable, which made it possible to test experimentally how the vegetable produce contained in said containers had a significantly longer shelf life than produce of the same kind kept in conventional containers, due precisely to the ethylene absorbent properties of the paper (1) which is the object of the invention.

As mentioned above, the paper (1) proposed by the invention is the paper (1) that is in contact with the foodstuffs, but it could also be the paper on the outer layer of the container, so that when boxes are stacked up it would act as an ethylene absorbent over the box below it in the stack, therefore, the packaged product would be preserved both directly by the inner paper of the container as well as indirectly by the outer paper.

## Claims

1. A method for manufacturing a corrugated cardboard container for preserving fruits, vegetables, plants or flowers during the transport or storage;
wherein the corrugated cardboard is made of three or five layers of paper and wherein at least an upper layer of paper is in contact with the fruits, vegetables, plants or flowers during the transport or storage;
the method being **characterized in that** it comprises the steps of:
(a) obtaining a water-based varnish (2) free of volatile compounds further comprising:
(a.1) dissolve in water a solid content based on ethylene absorbent materials comprising clays and/or active carbon and/or zeolites with a pore size ranging between 3,5 and 5 angstroms and a granulometry ranging between 1 and 15 microns with a load percentage of the solid content ranging 1% and 47% w/w;
(b) apply the water-based varnish (2) obtained in step (a) on a sheet of paper (1) that conforms, at least, the upper layer of paper of the corrugated carboard container that is contact with the fruits, vegetables, plants or flowers during the transport or storage; and wherein the application of the water-based varnish (2) is made by means of flexography techniques with a dry weight in grams ranging between 0,5 g/m² and 15 g/m².

2. The method of claim wherein the load percentage of the solid content comprising clays and/or active carbon and/or zeolites is 47% w/w.

3. A corrugated cardboard container arranged for preserving fruits, vegetables, plants or flowers during the transport or storage obtained with the method of claim 1 or claim 2;
wherein the corrugated cardboard is made of layers of paper and wherein at least one layer of paper is in contact with the fruits, vegetables, plants or flowers during the transport or storage;
**characterized in that** the at least one layer of paper that is in contact with the fruits, vegetables, plants or flowers during the transport or storage consists on a sheet of paper (1) coated with a water-based varnish (2) made of a mixture of solid content based on ethylene absorbent materials comprising clays and/or active carbon and/or zeolites with a pore size ranging between 3,5 and 5 angstroms and a granulometry ranging between 1 and 15 microns with a load percentage of the solid content ranging 1% and 47% w/w and a dry weight in grams ranging between 0,5 g/m² and 15 g/m².

4. The container of claim 3 wherein the load percentage of the solid content comprising clays and/or active carbon and/or zeolites is 47% w/w.

## Patentansprüche

1. Verfahren zur Herstellung eines Wellpappebehälters zur Aufbewahrung von Früchten, Gemüse, Pflanzen oder Blumen während des Transports oder der Lagerung;
wobei die Wellpappe aus drei oder fünf Papierlagen besteht und wobei mindestens eine obere Papierlage während des Transports oder der Lagerung mit den Früchten, Gemüsen, Pflanzen oder Blumen in Kontakt steht;
wobei das Verfahren **dadurch gekennzeichnet ist, dass** es folgende Schritte umfasst:
(a) Erhalten eines wasserbasierten Lacks (2), der frei von flüchtigen Verbindungen ist. ferner umfassend:
(a.1) Lösen in Wasser eines Feststoffgehalts auf der Basis von ethylenabsorbierenden Materialien, umfassend Tone und/oder Aktivkohle und/oder Zeolithe mit einer Porengröße im Bereich zwischen 3,5 und 5 Angström und einer Granulometrie im Bereich zwischen 1 und 15 Mikrometern mit einem Ladungsanteil des Feststoffgehalts im Bereich von 1 % bis 47 % w/w;
(b) Auftragen des in Schritt (a) erhaltenen wasserbasierten Lacks (2) auf ein Papierbogen (1), der mindestens die obere Papierlage des Wellpappebehälters bildet, die während des Transports oder der Lagerung mit den Früchten, Gemüsen, Pflanzen oder Blumen in Kontakt steht; und wobei das Auftragen des wasserbasierten Lacks (2) mit Hilfe von Flexodrucktechniken mit einem Trockengewicht in Gramm im Bereich zwischen 0,5 g/m² und 15 g/m² erfolgt_

2. Verfahren gemäß Anspruch 1, wobei der Ladungsanteil des Feststoffgehalts, der Tone und/oder Aktivkohle und/oder Zeolithe umfasst, 47 % w/w beträgt.

3. Wellpappebehälter zur Aufbewahrung von Früchten, Gemüse, Pflanzen oder Blumen während des Transports oder der Lagerung, der mit dem Verfahren gemäß Anspruch 1 oder Anspruch 2 erhalten wurde;
wobei die Wellpappe aus Papierlagen besteht und wobei mindestens eine Papierlage während des Transports oder der Lagerung mit den Früchten, Gemüsen, Pflanzen oder Blumen in Kontakt steht;
**dadurch gekennzeichnet, dass** die mindestens eine Papierlage, die während des Transports oder der Lagerung mit den Früchten, Gemüsen, Pflanzen oder Blumen in Kontakt steht, aus einem Papierbogen (1) besteht, der mit einem wasserbasierten Lack (2) beschichtet ist, der aus einem Gemisch mit Feststoffgehalt auf der Basis von ethylenabsorbierenden Materialien besteht, umfassend Tone und/oder Aktivkohle und/oder Zeolithe mit einer Porengröße im Bereich zwischen 3,5 und 5 Angström und einer Granulometrie im Bereich zwischen 1 und 15 Mikrometern mit einem Ladungsanteil des Feststoffgehalts im Bereich von 1 % bis 47 % w/w und einem Trockengewicht in Gramm im Bereich zwischen 0,5 g/m² und 15 g/m².

4. Behälter gemäß Anspruch 3, wobei der Ladungsanteil des Feststoffgehalts, der Tone und/oder Aktivkohle und/oder Zeolithe umfasst, 47 % w/w beträgt.

## Revendications

1. Méthode de fabrication de boîtes en carton ondulé pour la conservation de fruits, de légumes, de plantes ou de fleurs pendant le transport ou l'entreposage ;
où le carton ondulé est constitué de trois ou cinq couches de papier et où la couche de papier supérieure au moins est en contact avec les fruits, les légumes, les plantes ou les fleurs pendant le transport ou l'entreposage ;
la méthode qui se **caractérise par le fait qu'**elle comprend les étapes suivantes :
(a) elle obtient un vernis à base d'eau (2) sans composés volatiles, comprenant à son tour :
(a.1) elle dissout dans de l'eau un contenu solide basé sur des matériaux absorbant l'éthylène comprenant des argiles et/ou du charbon actif et/ou des zéolites avec une taille des pores qui va de 3,5 à 5 angströms et une granulométrie comprise entre 1 et 15 microns avec un pourcentage de charge du contenu solide entre 1 et 47 % poids pour poids ;
(b) elle applique le vernis à base d'eau (2) obtenu à l'étape (a) sur une feuille de papier (1) qui constitue, au moins, la couche supérieure de papier de la boîte en carton ondulé qui est en contact avec les fruits, les légumes, les plantes ou les fleurs pendant le transport ou l'entreposage ; et où l'application du vernis à base d'eau (2) est réalisée par des techniques de flexographie avec un poids sec en grammes qui va de 0,5 g/m² à 15 g/m².

2. La méthode de la revendication 1 où le pourcentage de charge du contenu solide comprenant des argiles et/ou du charbon actif et/ou des zéolites est de 47 % poids pour poids.

3. Une boîte en carton ondulé prévue pour la conservation des fruits, des légumes, des plantes ou des fleurs pendant le transport ou l'entreposage obtenue par la méthode de la revendication 1 ou la revendication 2 ;
où le carton ondulé est constitué de couches de papier et où une couche de papier au moins est en contact avec les fruits, les légumes, les plantes ou les fleurs pendant le transport ou l'entreposage ;
**caractérisé par le fait qu'**une couche de papier au moins qui est en contact avec les fruits, les légumes, les plantes ou les fleurs pendant le transport ou l'entreposage consiste en une feuille de papier (1) avec un revêtement de vernis à base d'eau (2) constitué d'un mélange de contenu solide basé sur des matériaux absorbant l'éthylène comprenant des argiles et/ou du charbon actif et/ou des zéolites avec une taille des pores qui va de 3,5 à 5 angströms et une granulométrie comprise entre 1 et 15 microns avec un pourcentage de charge du contenu solide entre 1 et 47 % poids pour poids et un poids sec en grammes qui va de 0,5 g/m² et 15 g/m² ;

4. La boîte de la revendication 3 où le pourcentage de charge du contenu solide comprenant des argiles et/ou du charbon actif et/ou des zéolites est de 47 % poids pour poids.
